# EUROPÄISCHE PATENTANMELDUNG

(11) **EP 1 319 455 A1**
(43) Veröffentlichungstag der Anmeldung: **18.06.2003**
(21) Anmeldenummer: 02406047.7
(22) Anmeldetag: 03.12.2002
(51) Int. Cl.: B23B 51/04, B28D 1/04, B23D 61/04

(54) **Gesteinskernbohrkrone**

(30) Priorität: 12.12.2001 DE 10161039
(71) Anmelder: HILTI Aktiengesellschaft, 9494 Schaan (LI)
(72) Erfinder: Bongers-Ambrosius, Hans-Werner, 81477 München (DE); Moseley, Steven, 3800 Feldkirch-Tisis (AT); Britten, Werner, 86899 Landsberg (DE)
(74) Vertreter: Wildi, Roland

(57) **Zusammenfassung**

Eine Kernbohrkrone (1) zum Bearbeiten von sprödem Material mit einem rohrförmigen Schaft (2) mit einer an einem Endbereich (3a) koaxial befestigten Drehmitnahme (4) sowie mehreren, am gegenüberliegenden Endbereich (3b) angeordneten Hartstoffeinsätzen (5a, 5b), welche mit einer definierten Schneidkante ausgebildet sind, wobei jeder einzelne Hartstoffeinsatz (5a, 5b) auf genau einem zugeordneten Zwischenträgersegment (6a, 6b) befestigt ist, welcher an dem offenen Endbereich (3b) des rohrförmigen Schaftes (2) befestigt ist.

## Beschreibung

Die Erfindung bezeichnet eine Kernbohrkrone zum Bearbeiten von sprödem Material wie Gestein, Beton und Mauerwerk.

Derartige Kernbohrkronen mit Durchmessern bis zu mehreren 100 mm bestehen aus einem rohrförmigen Schaft mit einer an dem geschlossenen Endbereich koaxial befestigten Drehmitnahme zur Verbindung mit einem drehenden Werkzeuggerät und mehreren, an dem offenen Endbereich bspw. durch Hartlöten oder Elektronenstrahlschweissen befestigten Einsätzen aus Hartstoff, welche ohne definierte Schneidkanten bspw. als Sinter-Diamant-Beläge ausgebildet sind.

Nach der DE3407427C2 sind die zumindest drei Hartstoffeinsätze mit definierter Schneidkante als PKD-Schneidelemente (Hartstoffeinsatz mit synthetischer polykristalliner Diamantschicht) sowie mit einem negativen Spanwinkel und abgerundeten Kanten ausgebildet. Die offene Endbereich mit den direkt in axiale Ausnehmungen eingesetzten Einsätzen aus Hartstoff ist als Verschleissteil in Form eines modular vorgefertigten Kronenringes aus höherwertigem Stahl ausgebildet, welcher mit dem Rohr verlötet ist.

Nach der DE4242465A1 weist eine Kernbohrkrone drei unterschiedlich angeordnete und ausgebildete PKD-Schneidelemente auf, welche direkt in axiale Ausnehmungen des rohrförmigen Schaftes befestigt sind. Zur direkten Befestigung der Hartstoffeinsätze durch Hartlöten oder Elektronenstrahlschweissen müssen die Ausnehmungen des Rohrs mit hoher Oberflächenqualität im Befestigungsbereich der Hartstoffeinsätze ausgebildet sein, was insbesondere durch das Sortiment von Kernbohrkronen unterschiedlicher Durchmesser technologisch aufwendig ist.

Die Aufgabe der Erfindung besteht in der Realisierung einer Kernbohrkrone mit definierten Schneiden, welche technologisch einfacher herstellbar ist.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine Kernbohrkrone einen rohrförmigen Schaft mit einer an einem Endbereich koaxial befestigten Drehmitnahme zur Verbindung mit einem drehenden Werkzeuggerät sowie mehrere, am gegenüberliegenden Endbereich angeordnete Einsätzen aus Hartstoff auf, welche mit einer definierten Schneidkante ausgebildet sind, wobei jeder einzelne Hartstoffeinsatz auf einem Zwischenträgersegment befestigt ist, welches an der offene Endbereich befestigt ist.

Da nur das jeweils einzeln vorliegende Zwischenträgersegment aus Metall, Metallfeinguss oder Sintermaterial mit hoher Oberflächenqualität im Befestigungsbereich des Hartstoffeinsatzes ausgebildet sein muss, ist eine modulare Vorfertigung des Zwischenträgersegmentes inklusive der Befestigung des Hartstoffeinsatzes möglich, welche stets einheitlich und somit technologisch einfach ist.

Vorteilhaft sind die Zwischenträgersegmente aus plastisch verformbaren Metall wie höherwertigem Stahl gefertigt, wodurch die Zwischenträgersegmente erst nach der Befestigung des Hartstoffeinsatzes entsprechend des Durchmessers der Kernbohrkrone gebogen werden können und somit das Sortiment der Zwischenträgersegmente unterschiedlicher Durchmesser technologisch einfacher zu fertigen ist.

Vorteilhaft sind zwei oder drei unterschiedliche Gruppen von Zwischenträgersegmenten vorhanden, welche sich durch die axiale und radiale Anordnung des Hartstoffeinsatzes unterscheiden, wodurch lokal höhere punktuelle Auflagekräfte mit gleichen Hartstoffeinsätzen erzielbar sind.

Vorteilhaft sind die mehreren Zwischenträgersegmente auf einer vollständig ebenen Stirnfläche des rohrförmigen Schaftes befestigt, welche einfach herstellbar ist.

Vorteilhaft ist die den Hartstoffeinsatz aufnehmende Seite des Zwischenträgersegmentes teilweise konkav ausgebildet, um die Kräfte vom Hartstoffeinsatz ohne wesentliche lokale Spannungsüberhöhungen in den rohrförmigen Schaft einzuleiten.

Vorteilhaft nimmt die axiale Höhe der Zwischenträgersegmente entgegen der Drehrichtung ab, wodurch hinter dem Hartstoffeinsatz ein zunehmender Freiraum ausgebildet wird.

Vorteilhaft entspricht die Dicke des Zwischenträgersegmentes im wesentlichen der Dicke des Hartstoffeinsatzes, wodurch dieser bruchfest befestigbar ist.

Vorteilhaft sind die Zwischenträgersegmente dicker als die Wandstärke des rohrförmigen Schaftes, wodurch auch bei einem dünnwandigen Schaft eine hinreichend stabile Befestigung des Hartstoffeinsatzes möglich ist.

Die Erfindung wird anhand der folgenden Figuren näher erläutert:
- Figur 1: zeigt eine perspektivische Darstellung einer Kernbohrkrone teilweise aufgebrochen.
- Figur 2: zeigt schematisch eine Draufsicht auf eine Kernbohrkrone, aufweisend vier Schneidsegmente,
- Figur 3: zeigt schematisch eine Draufsicht auf eine Kernbohrkrone, aufweisend fünf Schneidsegmente,
- Figur 4: zeigt schematisch eine Draufsicht auf eine Kernbohrkrone, aufweisend zwei Schneidsegmente.

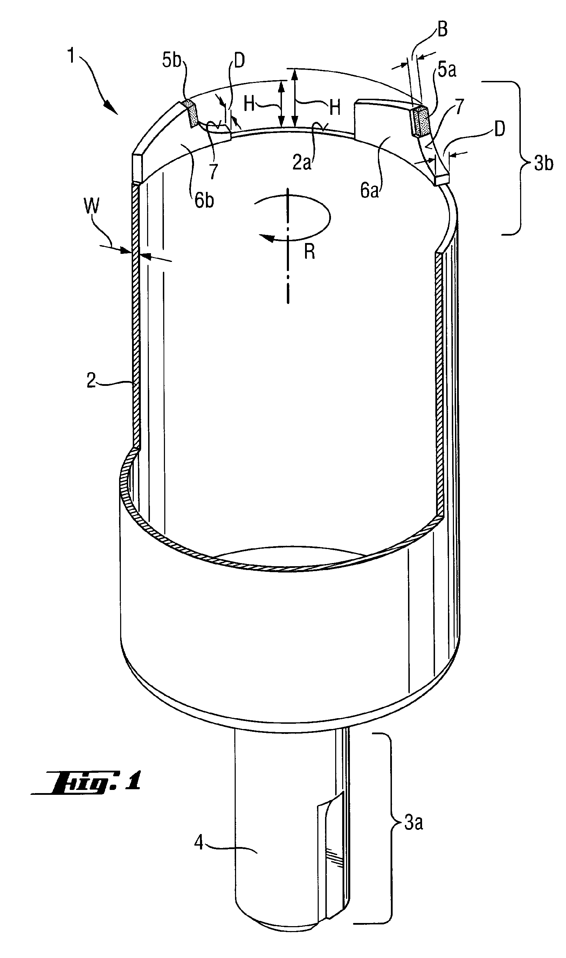

Nach Fig. 1 weist eine im Längsschnitt dargestellte Kernbohrkrone 1 einen rohrförmigen Schaft 2 mit einer an einem Endbereich 3a koaxial befestigten Drehmitnahme 4 sowie mehrere, am gegenüberliegenden Endbereich 3b angeordnete, als PKD-Schneidelemente ausgebildete Hartstoffeinsätze 5a, 5b auf. Jeder einzelne Hartstoffeinsatz 5a, 5b ist auf einem Zwischenträgersegment 6a, 6b befestigt, welches an dem offenen Endbereich 3b befestigt ist. Der Hartstoffeinsatz 5a des Zwischenträgersegments 6a ist radial und axial leicht versetzt zum Hartstoffeinsatz 5b des Zwischenträgersegments 6b, wodurch zwei unterschiedliche Gruppen von Zwischenträgersegmenten 6a, 6b vorhanden sind. Alle Zwischenträgersegmente 6a, 6b sind auf einer vollständig ebenen Stirnfläche 2a des rohrförmigen Schaftes 2 befestigt. Die den Hartstoffeinsatz 5a, 5b aufnehmende Seite 7 des Zwischenträgersegmentes 6a, 6b ist teilweise konkav ausgebildet. Die axiale Höhe H der Zwischenträgersegmente 6a, 6b nimmt entgegen der Drehrichtung R ab. Die Dicke D des Zwischenträgersegmentes 6a, 6b, welches im wesentlichen der Breite B des Hartstoffeinsatzes 5a, 5b entspricht, bzw. geringfügig kleiner ist, ist grösser als die Wandstärke W des rohrförmigen Schaftes 2. Die Dicke D des Zwischenträgersegmentes 6a, 6b nimmt entgegen der Drehrichtung R ab.

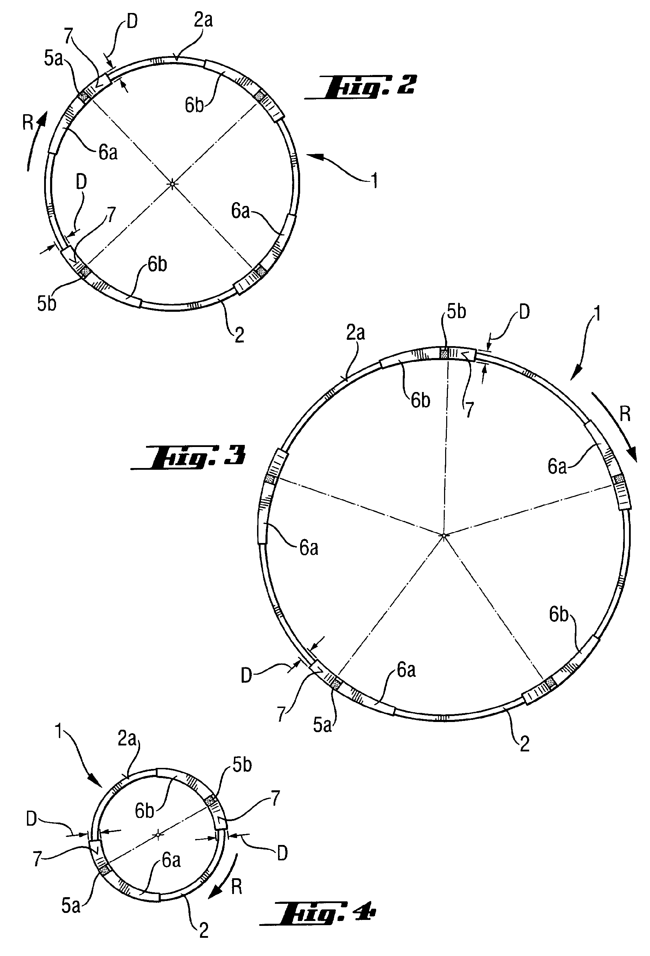

Nach Fig. 2 ist ein Sortiment von Kernbohrkronen 1 unterschiedlichen Durchmessers mit mehreren, bis auf die Krümmung einheitlichen Gruppen von Zwischenträgersegmenten 6a, 6b bestückt.

## Patentansprüche

1. Kernbohrkrone zum Bearbeiten von sprödem Material mit einem rohrförmigen Schaft (2) mit einer an einem Endbereich (3a) koaxial befestigten Drehmitnahme (4) sowie mehreren, am gegenüberliegenden Endbereich (3b) angeordneten Hartstoffeinsätzen (5a, 5b), welche mit einer definierten Schneidkante ausgebildet sind, **dadurch gekennzeichnet, dass** jeder einzelne Hartstoffeinsatz (5a, 5b) auf genau einem zugeordneten Zwischenträgersegment (6a, 6b) befestigt ist, welches an dem offenen Endbereich (3b) des rohrförmigen Schaftes (2) befestigt ist.

2. Kernbohrkrone nach Anspruch 1, **dadurch gekennzeichnet, dass** die Zwischenträgersegmente (6a, 6b) aus plastisch verformbarem Metall gefertigt sind.

3. Kernbohrkrone nach Anspruch 1 oder 2, **dadurch gekennzeichnet, dass** zumindest zwei unterschiedliche Gruppen von Zwischenträgersegmenten (6a, 6b) vorhanden sind, welche sich durch die axiale und radiale Anordnung des Hartstoffeinsatzes (5a, 5b) unterscheiden.

4. Kernbohrkrone nach einem der vorherigen Ansprüche, **dadurch gekennzeichnet, dass** die mehreren Zwischenträgersegmente (6a, 6b) auf einer vollständig ebenen Stirnfläche (2a) des rohrförmigen Schaftes (2) befestigt sind.

5. Kernbohrkrone nach einem der vorherigen Ansprüche, **dadurch gekennzeichnet, dass** die den Hartstoffeinsatz (5a, 5b) aufnehmende Seite (7) des Zwischenträgersegmentes (6a, 6b) teilweise konkav ausgebildet ist.

6. Kernbohrkrone nach einem der vorherigen Ansprüche, **dadurch gekennzeichnet, dass** die axiale Höhe (H) und/oder Dicke (D) der Zwischenträgersegmente (6a, 6b) entgegen der Drehrichtung (R) abnimmt.

7. Kernbohrkrone nach einem der vorherigen Ansprüche, **dadurch gekennzeichnet, dass** die Dicke (D) des Zwischenträgersegmentes (6a, 6b) im wesentlichen der Breite (B) des Hartstoffeinsatzes (5a, 5b) entspricht.

8. Kernbohrkrone nach einem der vorherigen Ansprüche, **dadurch gekennzeichnet, dass** die Zwischenträgersegmente (6a, 6b) dicker als die Wandstärke (W) des rohrförmigen Schaftes (2) sind.
